(19) Europäisches Patentamt
European Patent Office
Office européen des brevets

(11) **EP 1 971 167 A1**

(12) **EUROPEAN PATENT APPLICATION**

(43) Date of publication:
**17.09.2008 Bulletin 2008/38**

(51) Int Cl.:
*H04Q 7/36* (2006.01)     *H04B 7/04* (2006.01)
*H04Q 7/38* (2006.01)

(21) Application number: **07425145.5**

(22) Date of filing: **15.03.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicants:
• **Siemens Networks S.p.A.**
**20126 Milano (IT)**

• **Politecnico Di Milano**
**20133 Milano (IT)**

(72) Inventors:
• **Sorrentino, Stefano**
**20133 Milan (IT)**
• **Spagnolini, Umberto**
**20046 Biassono (MI) (IT)**

(54) **Method and apparatus for scheduling communication resources, corresponding communication system and computer program product**

(57)     A scheduler (P-SBS) for scheduling the allocation of channel resources to users of a wireless communication system (BS; MS1, MS 2, ..., MS k) is configured for:
- allotting to the users respective allocation scores as a function of at least one parameter of the channel resources, and
- scheduling allocation of the channel resources to the users as a function of the allocation scores allotted thereto.

The respective allocation scores are allotted as the sum of:
- i) a causal function of past measurements of the parameter(s) of the channel resources, and
- ii) an anti-causal function of future values of the parameter(s) of the channel resources.

**Description**

Field of the invention

The invention relates to techniques for scheduling (i.e. selectively allocating) channel resources in wireless communications.

Description of the related art

Throughout this description, various publications are cited as representative of related art to the invention. For the sake of simplicity, these documents will be referred by reference numbers in square brackets, e.g., [x]. A complete list of these publications, ordered according to the reference, numbers is reproduced in the section entitled "List of References" at the end of the description.

The task of scheduling channel resources in communications systems and networks is performed by modules currently referred to as "schedulers". The objective of schedulers is to assign channel resources (e.g. channel assignment to users, bandwidth, spatial beams, etc) in a smart way. The objective is to maximize the throughput (e.g. the number of served users) while still complying with Quality of Service (QoS) constraints.

So-called "channel aware" schedulers play a crucial role in the performance enhancement of wireless systems (such as WiMAX 802.16x, 3GPP LTE - HSDPA, Winner, etc) by taking advantage of channel fluctuations for leveraging the gain that results in user selections (multiuser diversity) to maximize the throughput performance.

In broadcast wireless systems (e.g., downlink for B3G and 4G systems) the users experience independent fading on their links. Schedulers such as the so-called "opportunistic" schedulers take advantage of users' channel fluctuations in order to leverage multiuser throughput gain by adaptively allocating the contended resource to the users that experience the best channel quality. Opportunistic schedulers achieve a convenient trade-off between sum-rate and fairness by optimizing the resource allocation with respect to the channel performance over past assignments (e.g., past user channel quality measurements or user throughput).

However, sum-rate maximization contrasts with other Quality of Service (QoS) requirements, such as the equal scheduling probability of different users (i.e., long-term fairness) and scheduling-jitter between the scheduling events of consecutive packets of the same flow.

The Proportional Fair Scheduler (PFS) [1] is based on past measurements of the channel quality for the scheduling optimization in the current time-slot. However, recent advances in channel power prediction (e.g., see [2] and references therein) proved meaningful advantages when the assignment in the current time-slot is based on both the past channel measurements and the predictions of the future channel conditions [3].

In the document [4], which was taken as a model for the preambles of the independent claims in this application, Bang et al. recently described a Predictive Proportional Fair Scheduler (PPFS) that is aware of past and future channel values, thus leveraging a significant throughput gain without affecting fairness. By using the analysis framework [5], the PPFS is shown in [4] to maximize a non-causal throughput utility function provided that error mismatch can be avoided in the analysis. Since the exhaustive numerical optimization required by the PPFS reduces the interests for any practical application, a simplified (but suboptimal in terms of sum-rate performance) iterative procedure implementation is also provided in [4]. Moreover, the prediction uncertainty is never explicitly taken into account in the PPFS optimization objective [4]. In addition, when heterogeneous fading statistics are experienced by different users, the assignment of Proportional Fair procedures is unfair [6-7].

Specifically, Cumulative Density Function (CDF) based scheduler (e.g., see [7-9]) apply asymptotically (i.e. for a large number of users) throughput optimality and long-term fairness among users [9] that hold true even when different users experience heterogeneous fading statistics [7]. The idea underlying a CDF scheduler is to opportunistically select those users that experience the best channel according to their cumulative function of the channel distribution that can be empirically estimated e.g. from the past channel measurements [7].

Object and summary of the invention

While the level of operation of a number of the arrangements considered in the foregoing is acceptable, a basic interest still subsists in improving the trade-off among the contrasting requirements of sum-rate, fairness in the assignment among users and jitter achieved by scheduling procedures: for instance, even though the PPFS procedure outperforms the PFS procedure, there is room for further exploitation of prediction strategies in opportunistic schemes.

The object of the invention is thus to meet the interest as previously specified.

According to the present invention, this object is achieved by means of a method having the features set forth in the claims that follow. The invention also relates to corresponding apparatus (i.e. a scheduler), a communication system including such as scheduler, as well as a related computer program product, loadable in the memory of at least one computer and including software code portions for performing the steps of the method of the invention when the product is run on a computer. As used herein, reference to such a computer program product is intended to be equivalent to reference to a computer-readable medium containing instructions for controlling a computer system to coordinate the performance of the method of the invention. Reference to "at least one computer" is evidently intended to highlight the possibility for the present invention to be implemented in a distributed/ modular fashion.

The claims are an integral part of the disclosure of the invention provided herein.

A preferred embodiment of the arrangement described herein is thus a method of allocating channel resources to users of a wireless communication system, the method including the steps of:

- allotting to said users respective allocation scores as a function of at least one parameter of said channel resources, and
- allocating said channel resources to said users as a function of the allocation scores allotted thereto,

the method characterized in that it includes the steps of allotting said respective allocation scores as the sum of:

- i) a causal function of past measurements of said at least one parameter of said channel resources, and
- ii) an anti-causal function of future values of said at least one parameter of said channel resources.

Preferably, said respective allocation scores are allotted as a causal/anticausal function of past measurements of said at least one parameter of said channel resources expressed in a closed mathematical form, i.e. including weights expressed in a closed non-iterative form.

The parameter in question may be selected e.g. out of a Signal-to-Noise Ratio and an interference level and/or combinations thereof.

In the presently preferred embodiment, the arrangement described herein provides an opportunistic scheduler based on cumulative density function with the introduction of predicted channel quality values. The Predictive Score Based Scheduler (Predictive-SBS) arrangement described herein is thus computationally convenient and achieves a better trade-off between sum-rate and fairness when compared to non-predictive schedulers.

Preferably, the arrangement described herein involves a non-iterative scheme that optimally takes into account prediction uncertainty. The arrangement described herein provides a framework for the optimization of the CDF based scheduler by taking advantage of both past and future (i.e., in terms of predicted) channel values; the corresponding procedure as described is robust with respect to the unreliable channel predictions since the scheduler is made aware of the prediction error power; furthermore, such a procedure lends itself to an efficient implementation due to its non-iterative nature.

The arrangement described herein is particularly adapted for possible use within the framework of Multiple Input Multiple Output (MIMO), Orthogonal Frequency Division Multiplexing (OFDM) or Orthogonal Frequency Division Multiple Access (OFDMA) communication systems.

Brief description of the annexed views

The invention will now be described, by way of example only, with reference to the enclosed figure of drawing, which is a block diagram representative of an exemplary context of use of a scheduler as described herein.

Detailed description of preferred embodiments

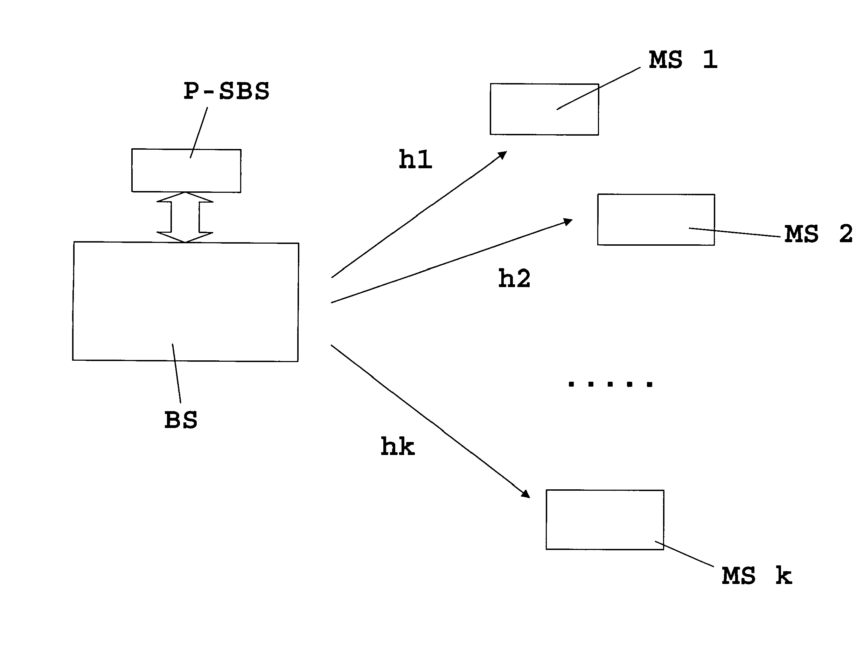

The block diagram of figure 1 is representative of a wireless network such as e.g. a cellular communication network and/or a network of any of the exemplary types mentioned in the introductory portion of this description. The network of figure 1 includes a Base Station BS cooperating with a number K of Mobile Stations MS1, MS2, ... , MSk.

Specifically, reference will be made in the following (with no intended limitation of the scope of the invention) to the "downlink" channels h1, h2, ..., hk by means of which the Base Station (BS) serves the K active Mobile Stations (MSs). In the following (to avoid specific assumptions on the incoming traffic model) each of these Mobile Stations will be assumed to have an infinite buffer of stored data.

While a single antenna single carrier TDMA system is considered here for the sake of simplicity, the extension to OFDMA and multiple antenna systems (e.g., so-called SDMA schemes) is straightforward and does not require to be illustrated here in detail.

Let $h_k(t) \sim \mathrm{CN}\left(\mu_k, v_k^2\right)$ be the narrowband Rice distributed channel in time-slot t between the BS and the k-th MS with Rician LoS factor $\phi_k = |\mu_k|^2 / v_k^2$ .

The impulse responses of the single antenna channels $h_k$(t) will thus be represented as stationary random processes with mean value $\mu_k$ (generally, a complex number) and variance $v_k^2$ .

The channels $h_k$(t) are arbitrarily correlated in time and mutually uncorrelated among different users.

Let $\gamma_k(t)=|h_k(t)|^2$ be the SNR (Signal-to-Noise Ratio) value for the k-th user in time slot t (unitary noise power is assumed).

The Base Station BS will include a Score Base Scheduler with the purpose of choosing at each time slot the user $k^*(t)$ according to a score function $\psi_k(t)$:

$$k^*(t) = \arg\max_{k} \{\psi_k(t)\} . \qquad 1)$$

Under the assumption of continuously distributed channel SNR values $\gamma_k(t)$, the score function in the Score Based Scheduler [7] procedure is

$$\psi_k(t) = \frac{1}{N_w} \sum_{\tau=1}^{N_w} 1(\gamma_k(t-\tau) \le \gamma_k(t)) , \qquad 2)$$

where $N_w$ is the scheduling time window. Function $1(x)=1$ if $x \ge 0$ and $1(x)=0$ if $x<0$.

In the exemplary case considered herein, the score $\psi_k(t)$ is regarded as the relative quality of the current SNR $\gamma_k(t)$ for the user k compared to its empirical distribution over the scheduling time window $N_w$. Therefore, the objective of the Score Base Scheduler is to select - as a function of a channel characteristic represented here by the current SNR $\gamma_k(t)$ - those users that experience a good channel realization according to their own channel statistical distribution and compared with the percentile of the others.

According to the frequentist definition, the asymptotic value of the score (2) is

$$\lim_{N_w \to \infty} \psi_k(t) = F_k(\gamma_k(t)) \qquad 3)$$

where $F_k(x)=p(\gamma_k(t) \le x)$ is the CDF of the SNR at time slot t and thus the Score Based Scheduler is asymptotically (for $N_w \to \infty$) equivalent to a CDF based scheduler.

In the following the score function for the scheduling will be based on the prediction of the SNR $\hat{\gamma}_k(t+\tau)$ based on the knowledge of the channel for $\tau<0$.

I. PREDICTIVE SCORE BASED SCHEDULER

In accordance with the present invention, the Base Station BS will include a Predictive Score Based Scheduler P-SBS.

Let the scheduling time widow be split into $N_f$ future samples (with regards to the current time slot t) and $N_p$ past samples, so that $N_w=N_f+N_p$. The new predictive-based score function $\psi_k(t)$ becomes

$$\psi_k(t) = \underbrace{\frac{1}{N_w} \sum_{\tau=1}^{N_p} 1(\gamma_k(t-\tau) \le \gamma_k(t))}_{\hat{\psi}_k(t)}$$

$$+ \underbrace{\frac{1}{N_w} \sum_{\tau=1}^{N_f} 1(\gamma_k(t+\tau) \le \gamma_k(t))}_{\breve{\psi}_k(t)}$$

$$= \hat{\psi}_k(t) + \breve{\psi}_k(t) , \qquad\qquad (4)$$

which here is explicitly divided between the causal function $\hat{\psi}_k(t)$ as based only on the past SNR measurements, and the anti-causal function $\breve{\psi}_k(t)$ for the future SNR values. Of course, for $N_f = 0$ the score ((4) reduces to the Score Based Scheduler (2).

The score ((4) cannot be evaluated in real time implementation as the future SNR samples $\gamma_k(t+\tau)$ for the evaluation of $\breve{\psi}_k(t)$ are not available yet. Hence, two different approaches are considered herein for the evaluation of the anti-causal term in ((4) based on the prediction values $\hat{\gamma}_k(t+\tau)$ (Predictive-SBS, or P-SBS, Type 1) or the direct estimation of (4) (Predictive-SBS, or P-SBS, Type 2).

A. Predictive-SBS Type 1

The straightforward approach is to trivially substitute the future SNR values $\gamma_k(t+\tau)$ in the score function ((4) with their predicted values $\hat{\gamma}_k(t+\tau)$

$$\psi_k^{Type1}(t) = \hat{\psi}_k + \frac{1}{N_w} \sum_{\tau=1}^{N_f} 1(\hat{\gamma}_k(t+\tau) \le \gamma_k(t)) . \qquad\qquad 5)$$

Eq. 5) defines the P-SBS Type 1. The way to optimally estimate the future SNR values $\gamma_k(t+\tau)$ will be discussed in greater detail in the following by referring to the exemplary case of an unbiased estimator.

B. Predictive-SBS Type 2

The P-SBS Type 1 may turn out (see below) not to be robust with respect to prediction errors, as the prediction uncertainty of the SNR values $\hat{\gamma}_k(t+\tau)$ is not taken into account in the estimation of ((4). Therefore, we define the score $\psi_k^{Type2}(t)$ of the Predictive-SBS Type 2 to be used in (1) as:

$$\psi_k^{Type2}(t) \equiv E[\psi_k(t)] = \hat{\psi}_k(t) + E[\breve{\psi}_k(t)] . \qquad\qquad 6)$$

The P-SBS Type 2 is optimal with regards to the prediction error, as Eq. 6) is the Minimum Mean Squared Error [10] estimator of the score $\psi_k(t)$ in ((4) conditioned to the knowledge of the faded channels over time. The closed form solution for 6) is based on specific assumptions on fading as it will be shown in the following for the optimal linear channel predictor.

Possible closed form solutions for the P-SBS described herein will now be discussed.

Predictive-SBS Type 1

Here we provide the optimal unbiased MMSE estimator of the predicted power $\hat{\gamma}_k(t+\tau)$ that has to be introduced in 5).

Following the main results in [4], let the BS be aware of the instantaneous channel values

$$\mathbf{h}_k(t) = [h_k(t), \quad h_k(t-1), \quad ..., \quad h_k(t-L+1)]^T \qquad 7)$$

for all the users. This assumption is reasonable in Time Division Duplex (TDD) systems where the BS exploits channel reciprocity for the downlink channel estimation, and for Frequency Division Duplex (FDD) systems where the BS is aware of $\mathbf{h}_k(t)$ from a feedback channel. However, since the feedback for FDD systems is usually based on the instantaneous SNR values $\gamma_k(t)$ for all the users, the results in Section IV have to be fully reconsidered based on SNR rather than $\mathbf{h}_k(t)$.

The MMSE estimation of the channel $h_k(t+\tau)$ based on the available channel observations $\mathbf{h}_k(t)$ is [10] :

$$\hat{h}_k(t+\tau) = E[h_k(t+\tau)|\mathbf{h}_k(t)]$$
$$= \mathbf{G}_k(\tau)(\mathbf{h}_k(t)-\mu_k\mathbf{1})+\mu_k \qquad (8)$$

where

$$\mathbf{G}_k(\tau) = \mathbf{c}_k^{\mathbf{H}}(\tau)\mathbf{R}_k^{-1} \qquad (9)$$

$$\mathbf{R}_k_{L\times L} = E\left[(\mathbf{h}_k(t)-\mu_k\mathbf{1})\cdot(\mathbf{h}_k(t)-\mu_k\mathbf{1})^H\right] \qquad (12\text{-}a)$$

$$\mathbf{c}_k^{\mathbf{H}}(\tau)_{L\times 1} = E\left[(\mathbf{h}_k(t)-\mu_k\mathbf{1})(h_k(t+\tau)-\mu_k)^*\right] \qquad (12\text{-}b)$$

From (8) the predicted power can be easily obtained as

$$\hat{\gamma}_k^b(t+\tau) = \left|\hat{h}_k(t+\tau)\right|^2 . \qquad (10)$$

However, (10) is a biased estimator of SNR, bias is

$$\delta_k(t) = E\left[\hat{\gamma}_k^b(t)-\gamma_k(t)|\mathbf{h}_k(t)\right] = \sigma_{\varepsilon_h,k}^2(t+\tau) \qquad (11)$$

where

$$\sigma_{\varepsilon_h,k}^2(t+\tau) = E\left[\left|\hat{h}_k(t+\tau) - h_k(t+\tau)\right|^2\right]$$

$$= v_k^2 - \mathbf{c}_k^{\mathbf{H}}(\tau)\mathbf{R}_k^{-1}\mathbf{c}_k(\tau) \qquad (12)$$

is the power of the channel prediction error. The unbiased MMSE estimator of the SNR to be used in 5) is finally obtained by removing the bias (11) from (10):

$$\hat{\gamma}_k(t+\tau) = \left|\hat{h}_k(t+\tau)\right|^2 + \sigma_{\varepsilon_h,k}^2(t+\tau). \qquad (13)$$

It will be appreciated that Eq. (13) extends the results in [2] for the Rayleigh channel model to the Rice channel.

Predictive-SBS Type 2

Here we derive the closed form expression for 6) which allows for the practical implementation of the Predictive-SBS Type 2.
The predictive-score term in 6) is reduced to:

$$E[\breve{\psi}_k(t)] = \frac{1}{N_w} E\left[\sum_{\tau=1}^{N_f} 1(\gamma_k(t+\tau) \le \gamma_k(t))\right]$$

$$= \frac{1}{N_w} \sum_{\tau=1}^{N_f} \Pr(\gamma_k(t+\tau) \le \gamma_k(t)), \qquad (14)$$

where $\Pr(\gamma_k(t+\tau) \le \gamma_k(t))$ is the probability that the future (unknown) SNR $\gamma_k(t+\tau)$ does not exceed $\gamma_k(t)$.
In order to evaluate (14), the conditional density for the future channel values is [10]:

$$h_k(t+\tau) \sim CN\left(\hat{h}_k(t+\tau), \sigma_{\varepsilon_h,k}^2(t+\tau)\right), \qquad (15)$$

where $\hat{h}_k(t+\tau)$ is given by (8) and $\sigma_{\varepsilon_h,k}^2(t+\tau)$ is given by (12). The future SNR $\gamma_k(t+\tau)=|h_k(t+\tau)|^2$ is a non central chi-squared random variable with two degrees of freedom with the following pdf (probability density function) [11]:

$$\Pr(\gamma_k(t+\tau)|\mathbf{h}_k(t)) \qquad (16)$$

$$= \frac{\xi_k+1}{\Omega_k} e^{\left(-\xi_k - \frac{(\xi_k+1)\gamma_k(t+\tau)}{\Omega_k}\right)} I_0\left(2\sqrt{\frac{\xi_k(\xi_k+1)\gamma_k(t+\tau)}{\Omega_k}}\right)$$

where

$$\xi_k = \left|\hat{h}_k(t+\tau)\right|^2 / \sigma^2_{\varepsilon_h,k}(t+\tau) \qquad (17)$$

$$\Omega_k = \left|\hat{h}_k(t+\tau)\right|^2 + \sigma^2_{\varepsilon_h,k}(t+\tau) \qquad (18)$$

and $\Pr(\gamma_k(t+\tau)|\mathbf{h}_k(t)=0)$ for $\gamma_k(t+\tau)<0$. Eq. (14) is solved by evaluating

$$\Pr(\gamma_k(t+\tau) \le \gamma_k(t)) = \int_0^{\gamma_k(t)} \Pr(\gamma_k(t+\tau)|\mathbf{h}_k(t))d\gamma_k(t+\tau),$$

$$(19)$$

This expression does not admit a closed form solution that could be convenient for the practical implementation of the scheduler.

However, the pdf as expressed by (16) is tightly approximated by the Gamma density (according to the Rice-Nakagami duality [11]), and the approximated closed form for (19) is easily obtained as the Gamma distribution:

$$\Pr(\gamma_k(t+\tau) \le \gamma_k(t)) \approx \frac{\Gamma(\eta_k, \lambda_k \gamma_k(t))}{\Gamma(\eta_k)}, \qquad (20)$$

where $\Gamma(z) = \int_0^\infty u^{z-1}e^{-u}du$ is the Gamma function (the values thereof are currently listed in mathematical tables),

$\Gamma(z,\alpha) = \int_0^\alpha u^{z-1}e^{-u}du$ is the incomplete Gamma function (the values thereof are again currently listed in mathematical tables), $\eta_k = (\xi_k+1)^2/(2\xi_k+1)$ and $\lambda_k = \eta_k/\Omega_k$. By introducing (20) into (14) we achieve the approximated closed form solution for 6) to be used in the Predictive-SBS Type 2.

Since the Gamma and the incomplete Gamma functions can be tabulated in a lookup table, the P-SBS Type 2 has a simple implementation that does not need any suboptimal iterative optimization as required for other predictive schedulers [4].

Performance of the P-SBS described herein has been quite favourably compared with performance of standard Score Base Scheduler and PFS schedulers. In the example below, the frame duration is set to $T_f = 5ms$ in order to perform the simulations with a granularity of the downlink resource assignment that is compliant to the 3GPP LTE (E-UTRA) [12] and the IEEE WiMAX 802.16e specifications [13]. All the $K$ active users are assumed to move with speed $v=3Km/h$ and to have infinite buffers of delay tolerant (e.g., best effort or video streaming) data to receive from the BS. The carrier frequency is set to $f_c=2GHz$. The scheduled users are assumed to receive data with an achievable rate (spectral efficiency) equal to $R_k(t)=\log_2(1+\gamma_k(t))b/s/Hz$.

The i.i.d. (independent identically distributed) unit power channels are temporally correlated according to their moving speed, these are generated as autoregressive processes with 32 poles [14] obtained by solving the Yule-Walker equations for the band-limited channels with Jakes' correlation.

Unbiased SNR prediction is performed with 32 samples length MMSE power predictor (13), as for the channel stationarity the linear prediction shows to be optimal.

The scheduling window is chosen as $N_w = 50$ time-slots completely projected in the past for the Score Based Scheduler ($N_{wf}=0$) and is equally divided between $N_{wp} = 25$ past measurements and $N_{wf}=25$ predicted (future) samples for the Predictive-SBS. The evaluation of Eq. (12) shows that extending the prediction window further than $N_{wf}=25$ samples does not provide appreciable advantages as the prediction MSE is already close to the channel power for $N_{wf}=25$. The effective window of the PFS is $N_w=50$ time-slots.

For the sake of comparisons the max SNR scheduler

$$k^*(t) = \arg\max_k \{\gamma_k(t)\} \qquad (21)$$

was also considered, which maximizes the sum-rate but disregards the fairness constraints. Therefore, the max SNR scheduler (21) achieves an upper bound of the sum-rate.

The sum-rate performance of the scheduler herein in a Non-LoS scenario ($\mu_k=0\forall k$) shows that that the Predictive-SBS Type 2 achieves a significant sum-rate gain with respects to the Score Based Scheduler of [7] and the P-SBS Type 1. The relative sum-rate gain provided by the P-SBS Type 2 towards the Score Based Scheduler increases with the number of users K.

Performance of the schedulers (Type 1 and Type 2 as described herein) for $K=15$ users was also evaluated in terms of the CCDF of the scheduling jitter (i.e., the time that intercourses between consecutive scheduling events of a given user). Jitter is often regarded as the most stringent QoS requirement for B3G/4G systems, and we believe that the jitter CCDF provides a useful insight on the procedure fairness. Both the Predictive-SBS Type 2 and the Predictive-SBS Type 1 were found to provide enhanced fairness over the original SBS [7].

The Predictive-SBS Type 2 thus provides a better trade-off between sum-rate and fairness than the Score Based Scheduler [7], in the considered scenario. Also, the Predictive-SBS Type 2 was found to achieve a higher sum-rate than the Predictive-SBS Type 1, which bears witness to the possibility of achieving an appreciable performance boost by optimally taking into account the prediction uncertainty.

The case of heterogeneously distributed user channels was also investigated, where each user experiences Rice fading statistics with unbalanced Rice factors $\left|\mu_k\right|^2/v_k^2$ .

Specifically, a $K=4$ user scenario was investigated where user 1 experiences Rayleigh fading while the other users experience full LoS propagation ($v_k=0$). A similar scenario has already been evaluated in [7], in order to compare the Score Based Scheduler and the PFS. As already pointed out in [6-7] PFS becomes unfair in this scenario; conversely, the Score Based Scheduler and the Predictive-SBS described herein were found to still achieve fairness in the scheduling probability of different users.

Experiences show that the scheduling is optimal, provided that the channel coherence time is smaller than the scheduling window $N_w$. However, when the channel coherence time is larger than the scheduling window, the scheduler is provided with additional fairness enforcement controls in order to prevent users to stack on favourable (and slowly varying) channel conditions. The results prove that the predictive scheduler described herein improves trade-off between sum-rate and fairness with respects to non predictive schedulers with a computationally economical implementation.

List of References

[1] Viswanath, D. N. Tse, and R. Laroia, "Opportunistic beamforming using dumb antennas," IEEE Trans. Inform., vol. 48, no. 6, pp. 1277-1294, June 2002

[2] T. Ekman, "Prediction of Mobile Radio Channels. Modeling and Design", PhD Thesis, Signals and Systems, Uppsala University, Sweden, 2002. Online: www.signal.uu.se/Publications/abstracts/a023.html

[3] S. Falahati, A. Svensson, T. Ekman and M. Sternad, "Adaptive modulation systems for predicted wireless channels," IEEE Trans. on Communications, vol. 52, Feb. 2004, pp. 307-316.

[4] H. Bang, T. EKman, D. Gesbert, "A channel predictive proportional fair scheduling procedure ", Proceedings of IEEE Workshop on Signal Processing Advances in Wireless Communications, (SPAWC) 2005, New York.

[5] H. Kushner, P. Whiting, "Convergence of Proportional Fair Sharing Procedures under General Conditions", Technical report, Bell Laboratories, 2002.

[6] J.M. Holtzman, "Asymptotic analysis of Proportional Fair procedure", Proc. of 12th IEEE PIMRC, 2001.

[7] T. Bonald, "A score-based opportunistic scheduler for fading radio Channels", Proc. of European Wireless, 2004

[8] D. Park, H. Seo, H. Kwon, B. Gi Lee, "Wireless Packet Scheduling Based on the Cumulative Distribution Function of User Transmission Rates", IEEE Trans. On Communications, vol. 53, Nov. 2005, pp 1919-1929

[9] S. Patil and G. de Veciana, "Measurement-Based Opportunistic Scheduling for Heterogenous Wireless Systems", submitted to IEEE Trans. On Communications, 2006

[10] S. M. Kay, "Fundamentals of Statistical Signal Processing. Estimation Theory", Prentice Hall, 1993, (Chapter 10)

[11] G. L. Stuber, "Principles of Mobile Communication. Second Edition.", Kluwer Academic Publishers, 2002, (Chapter 2)

[12] 3GPP TR 25.814, "Physical layer aspects for evolved Universal Terrestrial Radio Access (UTRA)", Release 7, 2006

[13] WiMAX Forum, "Mobile WiMAX - Part I: A Technical Overview and Performance Evaluation", August 2006. Online: www.wimaxforum.org

[14] K. E. Baddour, N. C. Beaulieu, "Autoregressive Models for Fading Channel Simulation", IEEE Global Telecommunications Conference, Globecom 2001, pp. 1187-1192.

Without prejudice to the underlying principles of the invention, the details and the embodiments may vary, even appreciably, with reference to what has been described by way of example only, without departing from the scope of the invention as defined by the annexed claims.

**Claims**

1. A method of allocating channel resources to users of a wireless communication system (BS; MS1, MS 2, ..., MS k) wherein said channel resources exhibit operating parameters, the method including the steps of:

   - allotting to said users respective allocation scores as a function of at least one said parameter of said channel resources, and
   - allocating said channel resources to said users as a function of the allocation scores allotted thereto,

   the method **characterized in that** it includes the steps of allotting said respective allocation scores as the sum of:

   - i) a causal function of past measurements of said at least one parameter of said channel resources, and
   - ii) an anti-causal function of future values of said at least one parameter of said channel resources.

2. The method of claim 1, including the step of allotting said respective allocation scores as a combination of causal/anticausal functions of past measurements of said at least one parameter of said channel resources expressed in a closed mathematical form.

3. The method of either of claims 1 or 2, wherein said at least one parameter of said channel resources is selected out of a Signal-to-Noise Ratio and an interference level.

4. The method of any of claims 1 to 3, wherein said anti-causal function is a function of predicted values for said at least one parameter of said channel resources.

5. The method of claim 4, wherein said predicted values are optimal unbiased MMSE estimations of said at least one parameter of said channel resources.

6. The method of claim 5, wherein said predicted values are optimal unbiased Minimum Mean Squared Error estimations of the power of the channel prediction error of the channels of said wireless communication system.

7. The method of claim 1, wherein said anti-causal function is an estimation of predicted values for said at least one parameter of said channel resources.

8. The method of claim 1, wherein channels of said wireless communication system (BS; MS1, MS 2, ..., MS k) are subject to fading, the method including the step of estimating the Minimum Mean Squared Error of said respective scores conditioned to the knowledge of said channels of said wireless communication system subject to fading over time.

9. The method of claim 1, including the step of deriving said anti-causal function from tabulated values of Gamma function and incomplete Gamma function of said predictions of future values of said of at least one parameter of said channel resources.

10. The method of any of the previous claims, including the step of allocating said channel resources as Multiple Input Multiple Output, MIMO, channel resources.

11. The method of any of claims 1 to 9, including the step of allocating said channel resources as Orthogonal Frequency Division Multiplexing, OFDM, or Orthogonal Frequency Division Multiple Access, OFDMA, channel resources.

**12.** A scheduler (P-SBS) for scheduling allocation of channel resources to users of a wireless communication system (BS; MS1, MS 2, ..., MS k), wherein the scheduler is configured for performing the steps on any of claims 1 to 11.

**13.** A wireless communication system (BS; MS1, MS 2, ..., MS k) including the scheduler of claim 12.

**14.** A computer program product, loadable in the memory of at least one computer and including software code portions adapted for performing the steps of the method of any of claims 1 to 11 when the product is run on a computer.

**European Patent Office**

## EUROPEAN SEARCH REPORT

Application Number

EP 07 42 5145

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/227697 A1 (BORST SIMON C [US] ET AL) 13 October 2005 (2005-10-13)<br>* paragraph [0001] - paragraph [0003] *<br>* paragraph [0025] - paragraph [0027] *<br>* paragraph [0029] - paragraph [0048] *<br>* paragraph [0063] *<br>----- | 1-14 | INV.<br>H04Q7/36<br>H04B7/04<br>H04Q7/38 |
| X | US 5 886 988 A (YUN LOUIS C [US] ET AL) 23 March 1999 (1999-03-23)<br>* column 6, line 27 - line 37 *<br>* column 6, line 66 - column 7, line 17 *<br>* column 14, line 7 - line 46 *<br>* column 14, line 63 - column 17, line 60 *<br>* column 19, line 40 - column 20, line 17 *<br>----- | 1-14 | |
| A | WO 00/51390 A (ERICSSON TELEFON AB L M [SE]) 31 August 2000 (2000-08-31)<br>* page 2, line 29 - page 3, line 4 *<br>* page 8, line 21 - page 9, line 3 *<br>* page 11, line 21 - page 12, line 2 *<br>----- | 1,12-14 | |

TECHNICAL FIELDS SEARCHED (IPC)

H04Q
H04L
H04B

The present search report has been drawn up for all claims

| Place of search | Date of completion of the search | Examiner |
|---|---|---|
| Berlin | 24 September 2007 | López Pérez, Mariano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 971 167 A1**

## ANNEX TO THE EUROPEAN SEARCH REPORT
## ON EUROPEAN PATENT APPLICATION NO.

EP 07 42 5145

This annex lists the patent family members relating to the patent documents cited in the above-mentioned European search report.
The members are as contained in the European Patent Office EDP file on
The European Patent Office is in no way liable for these particulars which are merely given for the purpose of information.

24-09-2007

| Patent document cited in search report | | | Publication date | Patent family member(s) | | Publication date |
|---|---|---|---|---|---|---|
| US 2005227697 | A1 | | 13-10-2005 | NONE | | |
| US 5886988 | A | | 23-03-1999 | AU | 5086498 A | 15-05-1998 |
| | | | | BR | 9712643 A | 26-10-1999 |
| | | | | CA | 2266391 A1 | 30-04-1998 |
| | | | | CN | 1234947 A | 10-11-1999 |
| | | | | EP | 0932986 A1 | 04-08-1999 |
| | | | | JP | 2001506431 T | 15-05-2001 |
| WO 0051390 | A | | 31-08-2000 | AU | 3205200 A | 14-09-2000 |
| | | | | CN | 1348663 A | 08-05-2002 |
| | | | | EP | 1155588 A1 | 21-11-2001 |
| | | | | JP | 2002538697 A | 12-11-2002 |
| | | | | SE | 521227 C2 | 14-10-2003 |
| | | | | SE | 9900618 A | 23-08-2000 |
| | | | | US | 6868277 B1 | 15-03-2005 |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **VISWANATH, D. N. TSE ; R. LAROIA.** Opportunistic beamforming using dumb antennas. *IEEE Trans. Inform.,* June 2002, vol. 48 (6), 1277-1294
- **T. EKMAN.** Prediction of Mobile Radio Channels. Modeling and Design. *PhD Thesis, Signals and Systems,* 2002, www.signal.uu.se/Publications/abstracts/a023.html
- **S. FALAHATI ; A. SVENSSON ; T. EKMAN ; M. STERNAD.** Adaptive modulation systems for predicted wireless channels. *IEEE Trans. on Communications,* February 2004, vol. 52, 307-316
- **H. BANG ; T. EKMAN ; D. GESBERT.** A channel predictive proportional fair scheduling procedure. *Proceedings of IEEE Workshop on Signal Processing Advances in Wireless Communications,* 2005
- **H. KUSHNER ; P. WHITING.** Convergence of Proportional Fair Sharing Procedures under General Conditions. *Technical report, Bell Laboratories,* 2002
- **J.M. HOLTZMAN.** Asymptotic analysis of Proportional Fair procedure. *Proc. of 12th IEEE PIMRC,* 2001
- **T. BONALD.** A score-based opportunistic scheduler for fading radio Channels. *Proc. of European Wireless,* 2004
- **D. PARK ; H. SEO ; H. KWON ; B. GI LEE.** Wireless Packet Scheduling Based on the Cumulative Distribution Function of User Transmission Rates. *IEEE Trans. On Communications,* November 2005, vol. 53, 1919-1929
- **S. PATIL ; G. DE VECIANA.** Measurement-Based Opportunistic Scheduling for Heterogenous Wireless Systems. *IEEE Trans. On Communications,* 2006
- **S. M. KAY.** Fundamentals of Statistical Signal Processing. Estimation Theory. Prentice Hall, 1993
- **G. L. STUBER.** Principles of Mobile Communication. Kluwer Academic Publishers, 2002
- Physical layer aspects for evolved Universal Terrestrial Radio Access. *Release,* 2006, vol. 7
- Mobile WiMAX - Part I: A Technical Overview and Performance Evaluation. *WiMAX Forum,* August 2006, www.wimaxforum.org
- **K. E. BADDOUR ; N. C. BEAULIEU.** Autoregressive Models for Fading Channel Simulation. *IEEE Global Telecommunications Conference,* 2001, 1187-1192